Europäisches Patentamt

European Patent Office

Office européen des brevets

(19)

(11) Veröffentlichungsnummer: **0 042 504**
**B1**

# (12) EUROPÄISCHE PATENTSCHRIFT

(45) Veröffentlichungstag der Patentschrift:
**29.06.83**

(51) Int. Cl.³: **C 25 D 17/18, C 25 D 3/44**

(21) Anmeldenummer: **81104183.9**

(22) Anmeldetag: **01.06.81**

(54) **Vorrichtung und Verfahren zum galvanischen Abscheiden von Aluminium.**

(30) Priorität: **23.06.80 DE 3023405**

(43) Veröffentlichungstag der Anmeldung:
**30.12.81 Patentblatt 81/52**

(45) Bekanntmachung des Hinweises auf die Patenterteilung:
**29.06.83 Patentblatt 83/26**

(84) Benannte Vertragsstaaten:
**AT BE CH FR GB IT LI LU NL SE**

(56) Entgegenhaltungen:
**DE-A-2 748 763**
**US-A-3 434 954**

(73) Patentinhaber: **SIEMENS AKTIENGESELLSCHAFT,**
**Berlin und München Wittelsbacherplatz 2,**
**D-8000 München 2 (DE)**

(72) Erfinder: **Stöger, Klaus, Ing. grad., Benekestrasse 40,**
**D-8500 Nürnberg (DE)**
Erfinder: **Birkle, Siegfried, Dr. rer. nat.Dipl.-Chem.,**
**Veit-Stoss-Strasse 46, D-8552 Höchstadt a.d. Aisch (DE)**
Erfinder: **Gehring, Johann, Hohe Warte 2,**
**D-8521 Spardorf (DE)**

## Vorrichtung und Verfahren zum galvanischen Abscheiden von Aluminium

Die Erfindung betrifft eine Vorrichtung und ein Verfahren zum galvanischen Abscheiden von Aluminium aus aprotischen, sauerstoff- und wasserfreien, aluminiumorganischen Elektrolyten.

Eine Vorrichtung und ein Verfahren dieser Art ist durch die DE-PS 25 37 285 bekanntgeworden. Diese bekannte Vorrichtung besteht aus einer luftdicht verschliessbaren und mit einem Inertgas beaufschlagbaren, beheizbaren Behandlungswanne, einer innerhalb der Behandlungswanne angeordneten drehbaren Galvanisiertrommel, einem mit der Behandlungswanne verbundenen ersten Behälter zur Speicherung des Elektrolyten und aus einem mit der Behandlungswanne verbundenen zweiten Behälter zur Speicherung einer Spülflüssigkeit. Bei dieser bekannten Vorrichtung muss die Galvanisiertrommel zum Be- und Entladen aus dem Galvanisiertrog entnommen werden, was nicht nur sehr umständlich und zeitaufwendig ist, sondern auch entsprechend grosse Einbring- und Ausbringöffnungen für die Galvanisiertrommel erfordert. Bekanntlich müssen die unter sauerstoff- und wasserstoff-freien Bedingungen hergestellten aluminiumorganischen Elektrolyte unter Luftabschluss gehalten werden, da jede Berührung mit Luft durch Reaktion mit Sauerstoff und Luftfeuchtigkeit eine erhebliche Verringerung der Leitfähigkeit des Elektrolyten und damit seiner Lebensdauer zur Folge hat. Aus diesem Grunde muss auch das Galvanisieren mit derartigen Elektrolyten unter Luftabschluss erfolgen. Bei der bekannten Vorrichtung lässt sich dies nur dadurch erreichen, dass der Elektrolyt nach dem Galvanisieren unter Schutzgasatmosphäre in seinen Vorratsbehälter zurückgepumpt wird. Vor dem Wiedereinfüllen des Elektrolyten in den Galvanisiertrog nach erneutem Beladen der Galvanisiertrommel muss der Galvanisiertrog mit Inertflüssigkeit geflutet und anschliessend wieder unter Inertgasatmosphäre gesetzt werden. Dieses Verfahren erfordert nicht nur einen erheblichen baulichen Aufwand, sondern ist auch zeitaufwendig.

Durch die DE-PS 25 37 256 und DE-PS 27 16 805 sind Vorrichtungen zum galvanischen Abscheiden von Aluminium bekannt, bei denen die Teile in einer nach aussen abgeschlossenen und mit Schutzgas beaufschlagbaren Galvanisierwanne behandelt werden. Die Beschickung und die Entnahme der zu galvanisierenden Teile erfolgt über mit Schutzgas flutbaren Schleusenkammern, in welchen eine von aussen bedienbare Werkstückübergabevorrichtung angeordnet ist. Auch diese bekannten Vorrichtungen erfordern einen erheblichen baulichen Aufwand, insbesondere die Schleusenkammern müssen der Grösse der zu behandelnden Teile angepasst sein. Ausserdem ist mit diesen bekannten Vorrichtungen die Behandlung von Schüttgut nicht ohne weiteres möglich. Ferner ist es sehr schwierig, die Schleusen vollkommen dicht zu halten, so dass die Gefahr besteht, dass durch eindiffundierende Luft der Elektrolyt allmählich geschädigt wird.

Der Erfindung liegt die Aufgabe zugrunde, eine Vorrichtung der eingangs beschriebenen Art derart zu verbessern, dass nicht nur der bauliche Aufwand ganz erheblich herabgesetzt werden kann, sondern auch die Möglichkeit des Elektrolyten mit Luft in Berührung zu kommen weitgehendst verhindert wird.

Gemäss der Erfindung ist eine Vorrichtung der eingangs benannten Art gekennzeichnet durch eine luftdicht verschliessbare und mit einem Inertgas beaufschlagbare, um die Längsachse drehbare Galvanisierglocke und ein auf der gleichen Achse angeordnetes, luftdicht abgeschlossenes drehbares Elektrolytgefäss, die mechanisch über ein verschliessbares, rohrförmiges Verbindungsstück miteinander verbunden und um eine zwischen Galvanisierglocke und Elektrolytgefäss gehende Drehachse gegenläufig so weit verschwenkbar sind, dass bei geöffnetem Verbindungsstück zumindest ein Teil des Elektrolyten vom Elektrolytgefäss in die Galvanisierglocke und umgekehrt fliessen kann.

Vorzugsweise ist die Galvanisierglocke über abklemmbare Leitungen und Ventile mit einem Behälter für Inertgase und zwei Vorratsbehältern für Inertflüssigkeiten zur Verdrängung der Luft bzw. des Inertgases aus der Galvanisierglocke und zum Waschen der galvanisierten Teile in der Galvanisierglocke in Verbindung bringbar.

Die erfindungsgemässe Vorrichtung wird vorteilhafterweise derart betrieben, dass nach Einlegen der zu galvanisierenden Teile in die zumindest teilweise mit Inertflüssigkeit gefüllte Galvanisierglocke und Verschliessen derselben die Luft durch Einleiten von ggf. weiterer Inertflüssigkeit vollständig verdrängt wird, dass nach vollständiger Verdrängung der Luft die Inertflüssigkeit in den Behälter für die Inertflüssigkeit zurückverlagert wird, wobei das Volumen der zurückverlagerten Inertflüssigkeit in der Galvanisierglocke durch Inertgas ergänzt wird, dass danach die Galvanisierglocke und der Elektrolytbehälter durch Drehen des Verbindungsstückes gegenläufig so weit verschwenkt werden, dass nach Öffnen des Verbindungsstückes der Elektrolyt aus dem Elektrolytbehälter in die Galvanisierglocke und das hierbei verdrängte Inertgas in den Elektrolytbehälter strömt, dass nach dem Einfüllen des Elektrolyten in die Galvanisierglocke das Verbindungsstück geschlossen und der Elektrolytbehälter und die Galvanisierglocke in ihre Ausgangsstellung zurückgeführt und zum Aluminieren der Teile um ihre Längsachse gedreht werden.

Vorzugsweise wird nach dem Aluminieren der Elektrolyt aus der Galvanisierglocke durch Öffnen des Verbindungsstückes in den Elektrolytbehälter abgelassen, wobei das aus dem Elektrolytbehälter verdrängte Inertgas in die Galvanisierglocke druckausgleichend zurückströmt, dass nach Schliessen des Verbindungsstückes die Galvanisierglocke mit Inertflüssigkeit aus dem zweiten Behälter vollständig gefüllt wird, wobei das zu verdrängende Inertgas in den diesem zugeordneten Behälter zurückverlagert wird und dass danach durch Belüftung der Galvanisierglocke die Inertflüssigkeit in den ihr zugeordneten Behälter abgelassen wird.

Zum vollständigen Entladen der Galvanisierglocke wird diese so weit verschwenkt, dass das Schüttgut beispielsweise in einen bereitgestellten Behälter fallen kann.

Vorteilhafterweise werden zwei oberhalb und zwei unterhalb der Galvanisiertrommel angeordnete Vorratsbehälter für die Inertflüssigkeiten verwendet, so dass das Waschen der galvanisierten Teile nach der Behandlung und das Fluten der Galvanisiertrommel nach dem Entleeren unter Zuhilfenahme der Schwerkraft vorgenommen werden kann.

Vorzugsweise werden bei Verwendung von zwei oberhalb und zwei unterhalb der Galvanisierebene angeordneten Vorratsbehältern für die Inertflüssigkeiten diese während dem Öffnen und Entleeren der Galvanisierglocke von den unteren in den oberen Behältern zurückgepumpt.

Die Galvanisierglocke und der mit dieser über das Zwischenstück verbundene Elektrolytbehälter können über den Kugelhahn miteinander verbunden oder getrennt werden. Ferner können sie miteinander einmal um die eigene Längsachse gedreht werden, wie es zum Galvanisieren des Schüttgutes erforderlich ist und zum anderen um einen Drehpunkt gedreht werden, so dass sich wahlweise die Galvanisierglocke oben und der Elektrolytbehälter unten oder der Elektrolytbehälter oben und die Galvanisierglocke unten befinden. Somit ist es möglich, dass aus dem Elektrolytbehälter durch die Schwerkraft Elektrolyt in die Galvanisierglocke oder nach dem Galvanisieren durch Schwenken der Elektrolyt wieder in den Elektrolytbehälter zurückfliessen kann. Die Galvanisierglocke selbst kann ausserdem zur Verdrängung der Luft mit einer Inertflüssigkeit oder zum Waschen der galvanisierten Teile mit einer geeigneten Waschflüssigkeit gefüllt werden. Sowohl das Füllen als auch das Entleeren der Galvanisierglocke mit Verdrängungs- oder Waschflüssigkeit wird vorzugsweise bewerkstelligt durch Ausnützen der Schwerkraft, so dass ein schnelles Füllen und Entleeren mit den entsprechenden Rohrleitungsquerschnitten ohne Pumpen möglich ist. Aus diesem Grunde befinden sich je zwei Vorratsbehälter ober- und unterhalb der Galvanisierebene. Von den Arbeitsschritten her ist es nun möglich, während der Galvanisierzeit die Inertflüssigkeiten von den unteren Behältern in die oberen zu pumpen durch relativ kleine Pumpen. Ausserdem kann die Galvanisierglocke mit einem Inertgas-Vorratsbehälter verbunden werden, so dass beim Entleeren der Galvanisierglocke bei den entsprechenden Medien das Volumen durch eine 100%-reine Inertgasatmosphäre ergänzt werden kann.

Anhand der Zeichnung, in der ein Ausführungsbeispiel im Prinzip dargestellt ist, wird die Erfindung näher erläutert.

Es zeigen:

Figur 1 einen Längsschnitt durch eine Vorrichtung zum galvanischen Abscheiden von Aluminium und

Figur 2 die Vorrichtung nach Figur 1 im Prinzip mit den zugehörigen Vorratsbehältern.

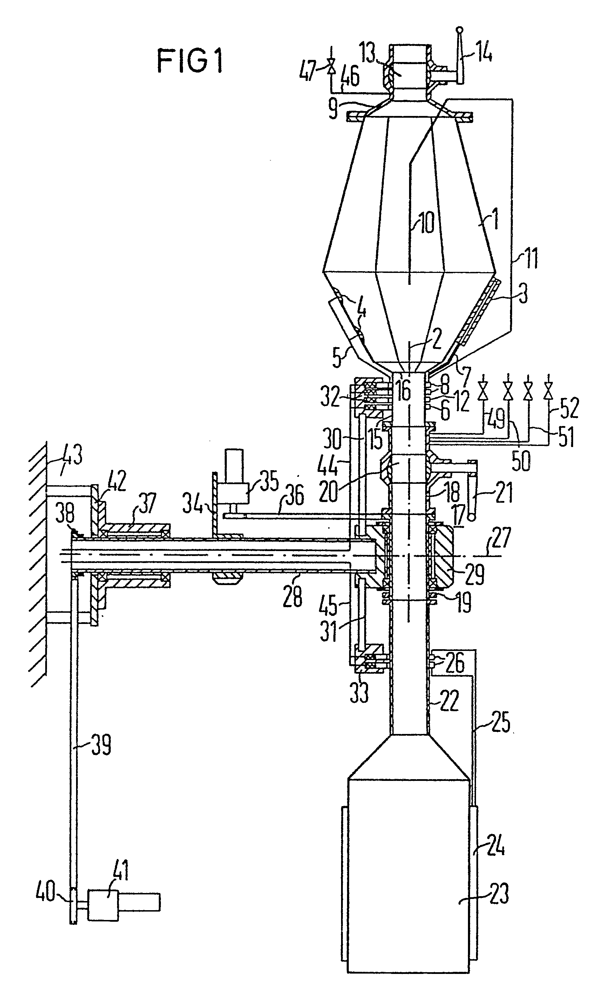

In Figur 1 ist mit 1 eine Galvanisierglocke aus nichtleitendem Werkstoff bezeichnet, die um ihre Längsachse 2 drehbar ist. Die Galvanisierglocke 1 ist im unteren Teil mit am Umfang angeordenten Heizpatronen 3 heizbar. Im Inneren der Galvanisierglocke sind Kathoden 4 untergebracht, die über Leitungen 5 zu einem Schleifring 6 geführt sind. Auch die Heizpatronen 3 stehen über Leitungen 7 mit entsprechenden Schleifringen 8 in Verbindung. Die offene Galvanisierglocke ist mit einem Deckel 9 verschlossen, über den eine Anode 10 in das Innere der Galvanisierglocke 1 eingeführt ist. Die Anode 10 steht über eine Leitung 11 mit einem Schleifring 12 in Verbindung.

Der Deckel 9 ist mit einem zentralen Verschluss in Form eines Kugelhahns 13 zur Beladung und Entladung der zu behandelnden Teile versehen. Der Kugelhahn 13 ist mit einer Handhabe 14 betätigbar.

Die Galvanisierglocke 1 ist mit einem zur Längsachse 2 koaxialen Anschlussstutzen 15 versehen, der die Schleifringe 6, 8 und 12 trägt. Der Anschlussstutzen 15 ist gegen das Innere der Galvanisierglocke 1 durch eine perforierte Zwischenwand 16 abgeschlossen, damit das zu galvanisierende Gut nicht in den Anschlussstutzen 15 gelangen kann.

An den Anschlussstutzen 15 ist ein rohrförmiges Zwischenstück 17 angeschlossen, das aus konstruktiven Gründen aus den beiden Teilen 18 und 19 besteht, wobei das Teil 18 einen Kugelhahn 20 aufweist, welcher mit einer Handhabe 21 betätigbar ist. Am Teil 19 des Zwischenstückes 17 ist ein mit einem Anschlussstutzen 22 versehener Elektrolytbehälter 23 befestigt, der gleichachsig mit der Galvanisierglocke 1 angeordnet ist und sich mit dieser um die Längsachse 2 dreht. Auch der Elektrolytbehälter 23 ist mit einer Aussenheizung 24 versehen. Diese kann ebenfalls mit Heizpatronen ausgestattet sein. Die Stromzufuhr erfolgt über elektrische Leitungen 25, die zu Schleifringen 26 geführt sind, die am Anschlussstutzen 22 befestigt sind.

Der mit der Galvanisierglocke 1 über das Verbindungsstück 17 verbundene Elektrolytbehälter 23 ist gemeinsam mit der Galvanisierglocke 1 um eine Drehachse 27 schwenkbar und zwar mit Hilfe einer Hohlwelle 28, an deren einem Ende ein Lagerbock 29, in welchem das rohrförmige Teil 19 des Zwischenstückes 17 drehbeweglich und gegen Axialverschiebung gesichert, gelagert ist. Der Lagerbock 29 ist mit rohrförmigen Trägern 30 und 31 versehen, die die Bürstenhalter 32 und 33 tragen.

Die Hohlwelle 28 trägt ferner noch eine Konsole 34 für einen Motor 35, welcher über einen Treibriemen, z.B. Zahnriemen, mit dem Teil 19 des Zwischenstückes 17 in Antriebsverbindung steht. Das andere Ende der Hohlwelle 28 ist in einem Lagerbock 37 drehbar gelagert und trägt ein Antriebsrad 38, welches über einen Treibriemen 39 mit einem Motorritzel 40 in Antriebsverbindung steht. Das Motorritzel 40 wird von einem Motor 41 angetrieben. Der Lagerbock 37 ist bei dem in der Figur 1 dargestellten Ausführungsbeispiel an einer Wandkonsole 42 befestigt. Auch der Motor 41 kann an einer Wand 43 befestigt sein.

Die mit den Schleifringen 6, 8, 12 bzw. 26 in Verbindung stehenden Bürsten der Bürstenhalter 32 bzw. 31 stehen über elektrische Leitungen 44 und 45 mit entsprechenden Anschlüssen in Verbindung. Sie sind durch die Hohlwelle 28 zu diesen geführt.

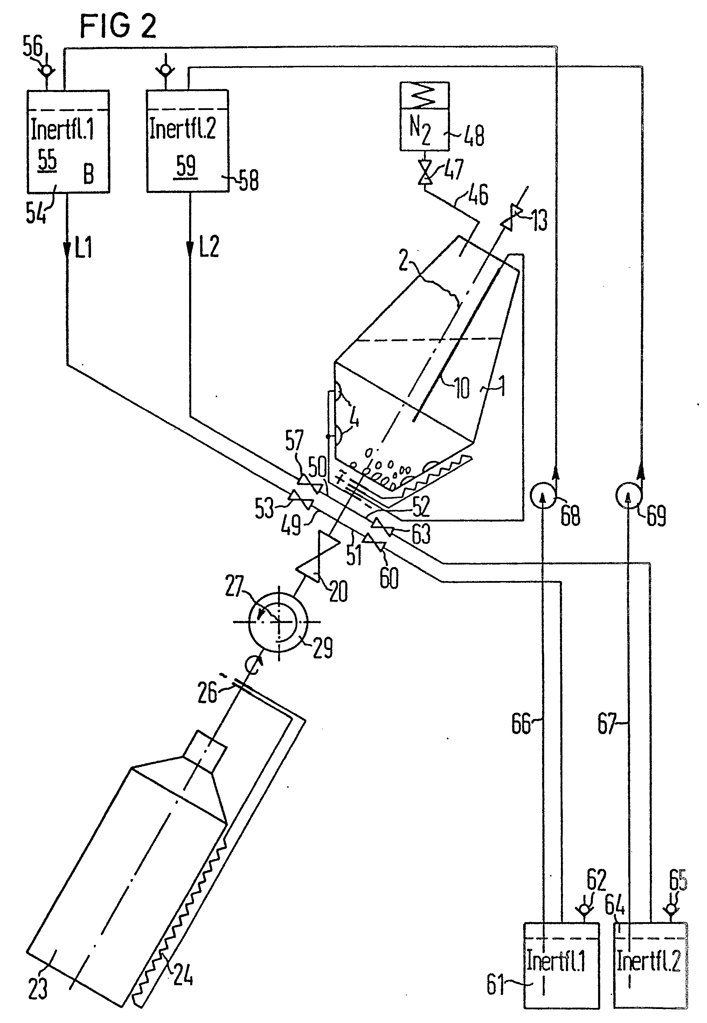

Die Galvanisierglocke 1 steht über eine Rohrleitung 46 und einem Ventil 47 mit einem Inertgasbehälter 48 in Verbindung, wie anhand der Figur 2 noch näher erläutert werden wird. Die Leitung 46 gemäss Figur 1 ist in an sich bekannter Weise über eine Schnellkupplung mit dem Lade- bzw. Entladestutzen des Deckels 9 in Verbindung.

In ähnlicher Weise ist das rohrförmige Teil 18 des Zwischenstückes mit einem entsprechenden Anschluss für Schnellkupplungen versehen, um Rohrleitungen 49 bis 52 anschliessen zu können. An sich genügt, dass das rohrförmige Teil 18 nur mit einem Kupplungsstück ausgestattet ist. Um aber die Anlage schnell und sicher betreiben zu können, ist es zweckmässig, dass für sämtliche Leitungen 49 bis 52 eigene Schnellkupplungen vorgesehen sind.

Wie aus Figur 2 zu ersehen ist, führt beispielsweise die Rohrleitung 49 über ein Ventil 53 zu einem Vorratsbehälter 54 mit Inertflüssigkeit 55, welche beispielsweise zum Fluten der Galvanisierglocke 1 verwendet wird, wie weiter unten noch weiter im einzelnen ausgeführt wird. Der Vorratsbehälter 54 ist mit einem Entlüfungsventil 56 versehen.

Die Rohrleitung 50 ist über ein Ventil 57 mit einem zweiten Vorratsbehälter 58 verbunden, in welchem sich Inertflüssigkeit 59 befindet, die zum Waschen der Teile nach dem Galvanisieren dient.

Die Rohrleitung 51 ist über ein Ventil 60 mit einem Behälter 61 in Verbindung, in welchem die zum Fluten der Galvanisierglocke 1 benutzte Inertflüssigkeit 55 abgelassen werden kann. Die Rohrleitung 52 ist über ein Ventil 63 mit einem weiteren Behälter 64 verbunden. Die Behälter 61 und 64 weisen Entlüfungsventile 62 und 65 auf. Über Rohrleitungen 66 und 67 können mit Hilfe von Förderpumpen 68 und 69 die in die Behälter 61 und 64 abgelassenen Inertflüssigkeiten 55 und 59 wieder zurückgepumpt werden. Vorzugsweise sind die Behälter 54 und 58 über der Galvanisierglocke und die Behälter 61 und 64 unterhalb der Galvanisierglocke angeordnet.

Der Elektrolytbehälter 23 kann so bemessen sein, dass sein Inhalt grösser ist als die zum Galvanisieren benötigte Elektrolytmenge. Das Einfüllen des Elektrolyten in den Elektrolytbehälter 23 kann beispielsweise so vorgenommen werden, dass bei geöffnetem Kugelhahn 20 nach Fluten der Galvanisierglocke und des Elektrolytbehälters sowie des Zwischenstückes 17 aus dem Inertbehälter 54 mit Inertflüssigkeit 55 diese nach Ablassen in den Behälter 61 durch Öffnen des Ventiles 60 und Öffnen des Ventiles 47 unter Inertgasatmosphäre aus dem Behälter 48 gesetzt wird. Nun kann der Elektrolyt über eine der Schnellkupplungen im Teil 18 des Zwischenstückes 17 bei geöffnetem Ventil 47 eingefüllt werden, wobei die durch den Elektrolyt verdrängte Inertgasatmosphäre in den Inertgasbehälter 48 gedrängt wird. Nach Schliessen des Kugelhahns 20 und Fluten der Galvanisierglocke 1 mit Inertflüssigkeit aus dem Behälter 54 kann das Inertgas über das geöffnete Ventil 47 in den Inertgasbehälter 48 gedrängt werden. Nach Öffnen des Kugelhahns 13 kann die Inertflüssigkeit durch Öffnen des Ventiles 60 in den Behälter 61 abgelassen werden. Vorzugsweise wird jedoch nur etwa die Hälfte der Inertflüssigkeit 55 abgelassen, so dass die Galvanisierglocke 1 noch halb gefüllt mit Inertflüssigkeit 55 ist. Die zu galvanisierende Ware wird nun in die Galvanisierglocke 1 gegeben. Nach Beladen der Galvanisierglocke 1 wird über den Kugelhahn 13 die restliche Luft in der Galvanisierglocke 1 durch weitere Zugabe von Inertflüssigkeit 55 aus dem Behälter 54 durch Öffnen des Ventiles 53 verdrängt.

Nachdem die restliche Luft in der Galvanisierglocke 1 entfernt ist, wird das Ventil 13 geschlossen und die in der Galvanisierglocke 1 befindliche Inertflüssigkeit 55 in den Behälter 61 durch Öffnen des Ventiles 60 verlagert, wobei das Volumen in der Galvanisierglocke 1 durch Inertgasatmosphäre $N_2$ aus dem Inertgasbehälter 48 ergänzt wird. Hierzu ist das Ventil 47 zu öffnen.

Nunmehr werden die Rohrleitungen 46 und 49 bis 52 abgeklemmt und die Galvanisierglocke 1 und der Elektrolytbehälter 23 um die Drehachse 27 so verschwenkt, dass die Galvanisierglocke 1 sich unten und der Elektrolytbehälter 23 oben befindet, so dass beim Öffnen des Kugelhahns 20 der Elektrolyt aus dem Elektrolytbehälter 23 in die Galvanisierglocke 1 einströmen kann, wobei die aus der Galvanisierglocke 1 verdrängte $N_2$-Atmosphäre in den Elektrolytbehälter 23 strömen kann. Es ist verständlich, dass das Umfüllen umso schneller vor sich gehen kann, je tiefer die Galvanisierglocke 1 und je höher der Elektrolytbehälter 23 verschwenkt werden. Dies erfolgt mit Hilfe des Motors 41 über den Treibriemen 39. Vorzugsweise ist der Motor 41 als Schrittmotor ausgebildet, so dass der Schwenkwinkel durch eine entsprechende Pulszahl vorgebbar ist.

Nach dem Schliessen des Kugelhahns 20 werden die Galvanisierglocke 1 und der Elektrolytbehälter 23 in die in Figur 2 dargestellte Ausgangslage zurückgedreht und zum Galvanisieren der Motor 35 eingeschaltet, der nun über den Treibriemen 36 die Galvanisierglocke 1 mit samt dem Elektrolytbehälter 23 um die Längsachse 2 dreht.

Nach Beendigung des Aluminierens wird der Kugelhahn 20 geöffnet und der sich in der Galvanisierglocke 1 befindliche Elektrolyt in den Elektrolytbehälter 23 abgelassen, wobei sich die aus dem Elektrolytbehälter 23 verdrängte $N_2$-Atmosphäre sich in der Galvanisierglocke 1 sammelt. Nach dem Überführen des Elektrolyten in den Elektrolytbehälter wird der Kugelhahn 20 geschlossen, über die Rohrleitung 50 wird nach Öffnen des Ventiles 57 die zum Waschen vorgesehene Inertflüssigkeit 59 aus dem Behälter 58 in die Galvanisierglocke 1 gelassen, wobei die aus der Galvanisierglocke 1 verdrängte $N_2$-Atmosphäre nach Öffnen des Ventiles 47 in den Inertgasbehälter 48 zurückverlagert wird. Anschliessend wird die in der Galvanisierglocke 1 befindliche Inertflüssigkeit über Leitung 52 und Ventil 63 in den Behälter 64 abgelassen unter Lüften der Galvanisierglocke 1. Die Galvanisierglocke 1 kann nun geöffnet und entladen werden. Hierzu kann die Galvanisierglocke 1 wiederum in Uhrzeiger verschwenkt werden, so dass sich das Schüttgut in einem bereitgestellten Behälter entleeren kann. Hierzu sind allerdings sämtliche Rohrleitungen abzuklemmen. Gegebenenfalls nach dem Rückschwenken der Galvanisierglocke 1 in die in Figur 2 dargestellte Ausgangsstellung, kann die Galvanisierglocke 1 erneut mit Schüttgut beladen werden, wobei sich die Vorgänge in der beschriebenen Reihenfolge wiederholen.

Zwischenzeitlich werden die in den Behältern 61 und 64 abgelassenen Inertflüssigkeiten mit Hilfe der Pumpen 68 und 69 in die oberen zugeordneten Behälter 54 und 58 zurückverlagert. Zweckmässigerweise sind die Behälter 54 und 58 grösser bemessen als die Behälter 61 und 64, so dass die Zurückverlagerung der Inertflüssigkeiten 55 und 59 aus den Behältern 61 und 64 erst während des Galvanisierbetriebes vorgenommen zu werden braucht.

Bezugszeichenliste

| | |
|---|---|
| 1 | Galvanisierglocke |
| 2 | Längsachse |
| 3 | Heizpatrone |
| 4 | Kathode |
| 5 | Leitungen |
| 6 | Schleifring |
| 7 | Leitungen |
| 8 | Schleifring |
| 9 | Deckel |
| 10 | Anode |
| 11 | Leitung |
| 12 | Schleifring |
| 13 | Kugelhahn |
| 14 | Handhabe |
| 15 | Anschlussstutzen |
| 16 | Zwischenwand |
| 17 | Verbindungsstück |
| 18 | Teile |
| 19 | Teile |
| 20 | Kugelhahn |
| 21 | Handhabe |
| 22 | Anschlussstutzen |
| 23 | Elektrolytbehälter |
| 24 | Aussenheizung |
| 25 | Leitungen |
| 26 | Schleifringe |
| 27 | Drehachse |
| 28 | Hohlwelle |
| 29 | Lagerbock |
| 30 | Träger |
| 31 | Träger |
| 32 | Bürstenhalter |
| 33 | Bürstenhalter |
| 34 | Konsole |
| 35 | Motor |
| 36 | Treibriemen |
| 37 | Lagerbock |
| 38 | Antriebsrad |
| 39 | Treibriemen |
| 40 | Motorritzel |
| 41 | Motor |
| 42 | Wandkonsole |
| 43 | Wand |
| 44 | Elektr. Leitung |
| 45 | Leitung |
| 46 | Rohrleitung |
| 47 | Ventil |
| 48 | Inertgasbehälter |
| 49 | Rohrleitung |
| 50 | Rohrleitung |
| 51 | Rohrleitung |
| 52 | Rohrleitung |
| 53 | Ventil |
| 54 | Vorratsbehälter |
| 55 | Inertflüssigkeit |
| 56 | Entlüftungsventil |
| 57 | Ventil |
| 58 | Vorratsbehälter |
| 59 | Inertflüssigkeit |
| 60 | Ventil |
| 61 | Behälter |
| 62 | Entlüftungsventil |
| 63 | Ventil |
| 64 | Behälter |
| 65 | Entlüftungsventil |
| 66 | Rohrleitung |
| 67 | Rohrleitung |
| 68 | Förderpumpen |
| 69 | Förderpumpen |

**Patentansprüche**

1. Vorrichtung zum galvanischen Abscheiden von Aluminium aus aprotischen, sauerstoff- und wasserfreien, aluminiumorganischen Elektrolyten, gekennzeichnet durch eine luftdicht verschliessbare und mit einem Inertgas beaufschlagbare, um die Längsachse (2) drehbare Galvanisierglocke (1) und ein auf der gleichen Achse (2) angeordneter, luftdicht abgeschlossener drehbarer Elektrolytbehälter (23), die mechanisch über ein verschliessbares, rohrförmiges Verbindungsstück (17) miteinander verbunden und um eine zwischen Galvanisierglocke (1) und Elektrolytbehälter (23) gehende Drehachse (27) gegenläufig so weit verschwenkbar sind, dass bei geöffnetem Verbindungsstück (17) zumindest ein Teil des Elektrolyten vom Elektrolytbehälter (23) in die Galvanisierglocke (1) und umgekehrt fliessen kann.

2. Vorrichtung nach Anspruch 1, dadurch gekennzeichnet, dass die Galvanisierglocke (1) und der mit dieser gleichachsig über das rohrförmige Verbindungsstück (17) verbundene Elektrolytbehälter (23) in beliebiger Schräglage drehbar sind.

3. Vorrichtung nach Anspruch 1 oder 2, dadurch gekennzeichnet, dass der Elektrolytbehälter (23) grösser bemessen ist als die zur Galvanisierung benötigte Elektrolytmenge.

4. Vorrichtung nach einem der Ansprüche 1 bis 3, dadurch gekennzeichnet, dass die Galvanisierglocke (1) und der Elektrolytbehälter (23) vorzugsweise mit einer Aussenheizung (24) beheizbar sind.

5. Vorrichtung nach einem der Ansprüche 1 bis 4, dadurch gekennzeichnet, dass die Galvanisierglocke (1) über abklemmbare Leitungen (46, 49 bis 52) und Ventile (47, 53, 57, 60, 63) mit einem Behälter (48) für Inertgas und zwei Vorratsbehältern (54, 61 bzw. 58, 64) für Inertflüssigkeiten (55, 59) zur Verdrängung der Luft bzw. des Inertgases aus der Galvanisierglocke (1) und zum Waschen der galvanisierten Teile in der Galvanisierglocke (1) in Verbindung bringbar ist.

6. Vorrichtung nach Anspruch 5, dadurch gekennzeichnet, dass je zwei Vorratsbehälter (54, 58) für die Inertflüssigkeiten (55, 59) oberhalb und zwei Vorratsbehälter (61, 64) unterhalb der Galvanisierebene angeordnet sind.

7. Vorrichtung nach Anspruch 6, dadurch gekennzeichnet, dass die unteren Vorratsbehälter (61, 64) mit den oberen Vorratsbehältern (54, 58) über Pumpen (68, 69) in Verbindung stehen.

8. Vorrichtung nach einem der Ansprüche 1 bis 7, dadurch gekennzeichnet, dass die Galvanisierglocke (1) mit einem Deckel (9) verschlossen ist, welcher einen zentralen Verschluss zur Beladung und Entnahme der zu behandelnden Teile aufweist.

9. Vorrichtung nach Anspruch 8, dadurch gekennzeichnet, dass der zentrale Verschluss ein Kugelhahn (13) ist.

10. Vorrichtung nach Anspruch 8 oder 9, dadurch gekennzeichnet, dass am Deckel (9) eine in das Innere der Galvanisierglocke (1) reichende Anode (10) angebracht ist, deren Anschluss von aussen über eine isolierte Durchführung erfolgt.

11. Vorrichtung nach einem der Ansprüche 1 bis 10, dadurch gekennzeichnet, dass das rohrförmige Verbindungsstück (17) einen Kugelhahn (20) oder ein Kugelventil aufweist.

12. Vorrichtung nach einem der Ansprüche 1 bis 11, dadurch gekennzeichnet, dass die Galvanisierglocke (1) und der Elektrolytbehälter (23) je einen zur Drehachse (2) koaxialen Anschlussstutzen (15, 22) zum Anflanschen an das rohrförmige Verbindungsstück (17) aufweisen.

13. Vorrichtung nach Anspruch 12, dadurch gekennzeichnet, dass die Welle (28) einen Motor (35) zum Antrieb des die Galvanisierglocke (1) und den Elektrolytbehälter (23) tragenden rohrförmigen Verbindungsstückes (17) trägt und mit diesem über einen Riementrieb (36) in Verbindung steht.

15. Vorrichtung nach einem der Ansprüche 12 bis 14, dadurch gekennzeichnet, dass der Anschlusstutzen (22) des Elektrolytbehälter (23) und der der Galvanisierglocke (1) mit Schleifringen (26, 8, 6, 12) für die Zufuhr des Heizstromes, und für den Anschluss der Kathode (4) und Anode (10) versehen sind.

16. Vorrichtung nach Anspruch 15, dadurch gekennzeichnet, dass die Welle (28) als Hohlwelle ausgebildet ist, durch die die Heiz- und Anschlussleitungen (44, 45) geführt sind, und dass an deren Aussenseite Träger (30, 31) für Bürstenhalter (32, 33) der mit den Schleifringen zusammenwirkenden Bürsten befestigt sind.

17. Verfahren zum galvanischen Abscheiden von Aluminium aus aprotischen, sauerstoff- und wasserfreien, aluminiumorganischen Elektrolyten unter Verwendung einer Vorrichtung nach Anspruch 1 und einem oder mehreren der folgenden Ansprüche, dadurch gekennzeichnet, dass nach Einlegen der zu galvanisierenden Teile in die zumindest teilweise mit Inertflüssigkeit (55) gefüllte Galvanisierglocke (1) und Verschliessen derselben die Luft durch Einleiten von ggf. weiterer Inertflüssigkeit vollständig verdrängt wird, dass nach vollständiger Verdrängung der Luft die Inertflüssigkeit in den Behälter (61) für die Inertflüssigkeit (55) zurückverlagert wird, wobei das Volumen der zurückverlagerten Inertflüssigkeit in der Galvanisierglocke (1) durch Inertgas ergänzt wird, dass danach die Galvanisierglocke (1) und der Elektrolytbehälter (23) durch Drehen des Verbindungsstückes (17) gegenläufig so weit verschwenkt werden, dass nach Öffnen des Verbindungsstückes (17) der Elektrolyt aus dem Elektrolytbehälter (23) in die Galvanisierglocke (1) und das hierbei verdrängte Inertgas in den Elektrolytbehälter (23) strömt, dass nach dem Einfüllen des Elektrolyten in die Galvanisierglocke (1) das Verbindungsstück (17) geschlossen und der Elektrolytbehälter (23) und die Galvanisierglocke (1) in ihre Ausgangsstellung zurückgeführt und zum Aluminieren der Teile um ihre Längsachse (2) gedreht werden.

18. Vorrichtung nach Anspruch 17, dadurch gekennzeichnet, dass nach dem Aluminieren der Elektrolyt aus der Galvanisierglocke (1) durch Öffnen des Verbindungsstückes (17) in den Elektrolytbehälter (23) abgelassen wird, wobei das aus dem Elektrolytbehälter (23) verdrängte Inertgas in die Galvanisierglocke (1) druckausgleichend zurückströmt, dass nach Schliessen des Verbindungsstückes (17) die Galvanisierglocke (1) mit Inertflüssigkeit (59) aus dem Behälter (58) vollständig gefüllt wird, wobei das zu verdrängende Inertgas in den Behälter (48) zurückverlagert wird und dass danach durch Belüftung der Galvanisierglocke (1) die Inertflüssigkeit (59) in den ihr zugeordneten Behälter (64) abgelassen wird.

19. Vorrichtung nach Anspruch 17 oder 18, dadurch gekennzeichnet, dass bei Verwendung von zwei oberhalb und zwei unterhalb der Galvanisierebene angeordneten Vorratsbehältern für die Inertflüssigkeiten (55, 59) diese während dem Öffnen und Entleeren der Galvanisierglocke (1) von der unteren in die oberen Behälter zurückgepumpt werden.

## Claims

1. Apparatus for the electrodeposition of aluminium from aprotic organo-aluminium electrolytes which are free of oxygen and water, characterised by an electrodeposition vessel (1) which can be sealed in air-tight manner, can be supplied with an inert gas, and can be rotated about its longitudinal axis (2), and by a rotatable electrolyte container (23) which is arranged on the same axis (2) and is sealed in air-tight manner, which are mechanically connected together by a closable tubular connecting element (17) and which can be pivoted in opposite directions about an axis of rotation (27) which passes between the electrodeposition vessel (1) and the electrolyte container (23), to an extent such that when the connecting element (17) is open, at least a part of the electrolyte can flow from the electrolyte container (23) into the electrodeposition vessel (1), and vice versa.

2. Apparatus as claimed in Claim 1, characterised in that the elctrodeposition vessel (1) and the electrolyte container (23) which is co-axially connected thereto by the tubular connecting element (17) are rotatable in an arbitrary slanting position.

3. Apparatus as claimed in Claim 1 or Claim 2, characterised in that the electrolyte container (23) is designed to be larger than the amount of electrolyte required for electrodeposition.

4. Apparatus as claimed in one of Claims 1 to 3, characterised in that the electrodeposition vessel (1) and the electrolyte container (23) can be heated, preferably by an external heating unit (24).

5. Apparatus as claimed in one of Claims 1 to 4, characterised in that the electrodeposition vessel (1) can be connected by lines (46, 49 to 52) which can be closed off and by valves (47, 53, 57, 60, 63) to a container (48) for inert gas and to two feed containers (54, 61 and 58, 64) for inert liquids (55, 59), in order to displace the air or inert gas from the electrodeposition vessel (1) and to wash the electroplated components in the electrodeposition vessel (1).

6. Apparatus as claimed in Claim 5, characterised in that, in each case, two feed containers (54, 58) for the inert liquids (55, 59) are arranged above the electrodeposition level, and two feed containers (61, 64) are arranged below it.

7. Apparatus as claimed in Claim 6, characterised in that the lower feed containers (61, 64) are connected to the upper feed containers (54. 58) through pumps (68, 69).

8. Apparatus as claimed in one of Claims 1 to 7, characterised in that the electrodeposition vessel (1) is closed by a cover (9) which has a central closure device for the loading and removal of the components to be treated.

9. Apparatus as claimed in Claim 9, characterised in that the central closure device consists of a ball-cock (13).

10. Apparatus as claimed in Claim 8 or Claim 9, characterised in that on the cover (9), there is arranged an anode (10) which extends into the interior of the electrodeposition vessel (1) and which is externally connected by way of an insulated duct.

11. Apparatus as claimed in one of Claims 1 to 10, characterised in that the tubular connecting element (17) includes a ball-cock (20) or a ball-valve.

12. Apparatus as claimed in one of Claims 1 to 11, characterised in that the electrodeposition vessel (1) and the electrolyte container (23) are each provided with a connecting member (15, 22) which is coaxial with the axis of rotation (2) and which is adapted to be flanged by connection to the tubular connecting element (17).

13. Apparatus as claimed in Claim 12, characterised in that the tubular connecting element (17) is arranged to be rotatable at the end of a shaft (28).

14. Apparatus as claimed in Claim 13, characterised in that the shaft (28) carries a motor (35) which serves to drive the tubular connecting element (17) which carries the electrodeposition vessel (1) and the electrolyte container (23) and is connected thereto through a belt drive (36).

15. Apparatus as claimed in one of Claims 12 to 14, characterised in that the connecting member (22) of the electrolyte container (23) and that of the electrodeposition vessel (1) are provided with slip rings (26, 8, 6, 12) for the supply of the heating current and for the connection of the cathode (4) and anode (10).

16. Apparatus as claimed in Claim 15, characterised in that the shaft (28) is formed as a hollow shaft through which pass the heating and connection lines (44, 45); and that the exterior thereof is attached to carriers (30, 31) for holders (32, 33) for brushes which co-operate with the slip rings.

17. A process for the electrodeposition of aluminium from aprotic organo-aluminium electrolytes which are free of oxygen and water, using apparatus as claimed in Claim 1 and one or more of the following Claims, characterised in that, after the insertion of the components to be electroplated into the electrodeposition vessel (1) which is at least partially filled with inert liquid (55) and the closure thereof, the air is entirely displaced by the introduction of further inert liquid if necessary; that, after the complete displacement of the air, the inert liquid is displaced back into the container (61) for the inert liquid (55), at which time the volume of the returned inert liquid in the electrodeposition vessel (1) is replenished with inert gas; that the electrodeposition vessel (1) and the electrolyte container (23) are then pivoted in oppostie directions by rotation of the connecting element (17) to such an extent that, after the opening of the connecting element (17), the electrolyte flows from the electrolyte container (23) into the electrodeposition vessel (1) and the inert gas thereby displaced flows into the electrolyte container (23); that, when the electrolyte has been introduced into the electrodeposition vessel (1), the connecting element (17) is closed and the electrolyte container (23) and the electrodeposition vessel (1) are returned to their initial positions and are rotated about their longitudinal axes (2) for the aluminization of the components.

18. A process as claimed in Claim 17, characterised in that, after the aluminization, the electrolyte is discharged from the electrodeposition vessel (1) into the electrolyte container (23); that the connecting element (17) is opened, at which time the inert gas which is displaced from the electrolyte container (23) flows back into the electrodeposition vessel (1), so as to effect pressure compensation; that, after the closure of the connecting element (17), the electrodeposition vessel (1) is completely filled with inert liquid (59) from the container (58), and the inert gas which is displaced is returned to the container (48); and that, as a result of the ventilation of the electrodeposition vessel (1), the inert liquid (59) is then discharged into the container (64) which is assigned to it.

19. A process as claimed in Claim 17 or Claim 18, characterised in that, when two feed containers arranged above the level of electrodeposition and two feed containers arranged below this level are used for the inert liquids (55, 59), during the opening and emptying of the electrodeposition vessel (1), these enert liquids are pumped back from the lower containers into the upper containers.

## Revendications

1. Appareillage pour le dépôt d'aluminium par voie électrolytique à partir d'électrolytes organoaluminiques, aprotiques, exempts d'oxygène et anhydres, caractérisé par une cloche de dépôt (1), qui peut être fermée de manière étanche à l'air, qui peut être alimentée en un gaz inerte et qui est montée rotative autour de l'axe longitudinal (2) et par un récipient à électrolyte (23) rotatif, qui es monté sur le même axe (2) et qui est fermé de manière étanche à l'air, qui communiquent entre eux par une pièce de raccordement (17) tubulaire pouvant être fermée et qui peuvent pivoter par rapport à un axe passant entre la cloche de dépôt (1) et le récipient à électrolyte (23) puisse s'écouler dans la cloche de dépôt (1) et inversement.

2. Appareillage suivant la revendication 1, caractérisé en ce que la cloche de dépôt (1) et le récipient à électrolyte (23) communiquant avec celle-ci qui a le même axe par la pièce de raccordement (17) tubulaire, peuvent être mis par rotation en n'importe quelle position inclinée.

3. Appareillage suivant la revendication 1 ou 2, caractérisé en ce que le récipient à électrolyte (23) a des dimensions plus grandes que la quantité d'électrolyte nécessaire au dépôt par voie électrolytique.

4. Appareillage suivant l'une des revendications 1 à 3, caractérisé en ce que la cloche de dépôt (1) et le récipient à électrolyte (23) peuvent être chauffés de préférence par un dispositif de chauffage extérieur (24).

5. Appareillage suivant l'une des revendications 1 à 4, caractérisé en ce que la cloche de dépôt (1) peut, pour refouler l'air ou le gaz inerte hors de la cloche de dépôt (1) et pour laver les pièces ayant reçu un dépôt par voie électrolytique dans cloche de dépôt (1), être mise en communication par des conduits (46, 49 à 52), qui peuvent être fermés et par des vannes (47, 53, 57, 60, 63) avec un récipient (48) pour le gaz inerte, et avec deux réservoirs (54, 61 et 58, 64) pour des liquides inertes (55, 59).

6. Appareillage suivant la revendication 5, caractérisé en ce que, respectivement, deux réservoirs (54, 58) pour les liquides inertes (55, 59) et deux réservoirs (61, 64) sont disposés au-dessus et au-dessous du plan de dépôt par voie électrolytique.

7. Appareillage suivant la revendication 6, caractérisé en ce que les réservoirs inférieurs (61, 64) communiquent avec les réservoirs supérieurs (54, 58) par des pompes (68, 69).

8. Appareillage suivant l'une des revendications 1 à 7, caractérisé en ce que la cloche de dépôt (1) est fermée par un couvercle (9) qui présente une fermeture centrale pour le chargement et le déchargement des pièces à traiter.

9. Appareillage suivant la revendication 8, caractérisé en ce que la fermeture centrale est un robinet à tournant sphérique (13).

10. Appareillage suivant la revendication 8 ou 9, caractérisé en ce que, sur le couvercle (9), est fixée une anode (10) allant jusqu'à l'intérieur de la cloche de dépôt (1) et dont la connexion s'effectue de l'extérieur, par une traversée isolée.

11. Appareillage suivant l'une des revendications 1 à 10, caractérisé en ce que la pièce de raccordement (17) tubulaire présente un robinet à tournant sphérique (20) ou un clapet à bille.

12. Appareillage suivant l'une des revendications 1 à 11, caractérisé en ce que la cloche de dépôt (1) et le récipient à électrolyte (23) présentent chacun un raccord (15, 22) coaxial à l'axe de rotation pour le bridage sur la pièce de raccordement (17) tubulaire.

13. Appareillage suivant la revendication 12, caractérisé en ce que la pièce de raccordement (17) tubulaire est montée tournante à l'extrémité d'un arbre (28).

14. Appareillage suivant la revendication 13, caractérisé en ce que l'arbre (28) porte un moteur (35) pour l'entraînement de la pièce de raccordement (17) tubulaire portant la cloche de dépôt (1) et le récipient à électrolyte (23) est relié à cette pièce de raccordement par une commande à courroies (36).

15. Appareillage suivant l'une des revendications 12 à 14, caractérisé en ce que la raccord (22) du récipient à électrolyte (23) et celui de cloche de dépôt (1) sont munis de bagues glissantes (26, 8, 6, 12) pour l'amenée du courant de chauffage et pour la connexion de la cathode (4) et de l'anode (10).

16. Appareillage suivant la revendication 5, caractérisé en ce que l'arbre (28) est agencé en arbre creux dans lequel sont guidés les conduits de chauffage et les conducteurs de connexion (44, 45) et en ce que, sur sa partie extérieure, sont fixés des supports (30, 31) pour des porte-brosses (32, 33) des brosses coopérant avec les bagues glissantes.

17. Procédé de dépôt d'aluminium par voie électrolytique à partir d'électrolytes organoaluminiques, aprotiques, exempts d'oxygène et anhydres, en utilisant un appareillage suivant la revendication 1 et l'une ou plusieurs des revendications suivantes, caractérisé en ce qu'après avoir placé les pièces à revêtir par voie électrolytique dans la cloche de dépôt (1) emplie au moins partiellement de liquide inerte (55), et après l'avoir fermée, on refoule entièrement l'air en introduisant éventuellement encore du liquide inerte, en ce que, après refoulement total de l'air, on renvoie le liquide inerte dans le récipient (61) pour le liquide inerte (55), le volume du liquide inerte renvoyé étant complété dans la cuve de dépôt (1) par du gaz inerte, en ce qu'ensuite on fait pivoter la cuve de dépôt (1) et le récipient à électrolyte (23) en faisant tourner la pièce de raccordement (17), si loin en sens opposé que, après ouverture de la pièce de raccordement (17), l'électrolyte s'écoule du récipient à électrolyte (23), en ce que, après le remplissage de la cuve de dépôt (1) par l'électrolyte, on ferme la pièce de raccordement (17) et on ramène le récipient à électrolyte (23) et la cloche de dépôt (1) dans leur position initiale et, pour réaliser le dépôt d'aluminium sur les pièces, on les fait tourner autour de leur axe longitudinal (2).

18. Procédé suivant la revendication 17, caractérisé en ce qu'après le dépôt d'aluminium, on évacue l'électrolyte de la cloche de dépôt (1) dans le récipient à électrolyte (23) en ouvrant la pièce de raccordement (17), le gaz inerte refoulé hors du récipient à électrolyte (23) retournant avec compensation de pression dans la cloche de dépôt (1), en ce que, après fermeture de la pièce de raccordement (17), on emplit entièrement la cloche de dépôt (1) à l'aide de liquide inerte (59) provenant du récipient (58), le gaz inerte à refouler étant renvoyé dans le récipient (48), et en ce qu'après mise à l'atmosphère de la cloche de dépôt, on évacue le liquide inerte (59) dans le récipient (64) qui lui est affecté.

19. Procédé suivant la revendication 17 ou 18, caractérisé en ce que, quand on utilise deux réservoirs disposés au-dessus du plan de dépôt et deux réservoirs disposés en dessous du plan de dépôt pour les liquides inertes (55, 59), on retourne ceux-ci par pompage pendant l'ouverture et la vidange de la cloche de dépôt (1), des réservoirs inférieurs aux réservoirs supérieurs.

FIG 1

FIG 2

0 042 504

13